# EUROPEAN PATENT SPECIFICATION

(11) **EP 2 167 910 B1**
(45) Date of publication and mention of the grant of the patent: **28.01.2015**
(21) Application number: 08772221.1
(22) Date of filing: 30.06.2008
(51) Int. Cl.: G01B 11/24, B65B 57/10, G01M 11/02, G01N 21/95

(54) **METHOD OF DETECTING THE ORIENTATION OF AN OPHTHALMIC LENS IN ITS PACKAGE**
VERFAHREN ZUR ERKENNUNG DER AUSRICHTUNG EINER AUGENLINSE IN IHRER VERPACKUNG
PROCÉDÉ DE DÉTECTION DE L'ORIENTATION D'UNE LENTILLE OPHTALMIQUE DANS SON EMBALLAGE

(30) Priority: 29.06.2007 US 947059 P
(43) Date of publication of application: 31.03.2010
(73) Proprietor: Johnson & Johnson Vision Care Inc., Jacksonville, FL 32256 (US)
(72) Inventor: CHRUSCH, Peter, Jacksonville, Florida 32256 (US); WILKINSON, Thomas, St. Johns, Florida 32259 (US); ADAMS, Jonathan, P., Jacksonville, Florida 32258 (US); AMADOR, Miguel, Orange Park, Florida 32003 (US)
(74) Representative: Tunstall, Christopher Stephen
(86) International application number: PCT/US2008/068698
(87) International publication number: WO 2009/006361

(56) References cited:
- EP-A- 0 686 459
- WO-A-01/84975
- WO-A-2007/060173
- WO-A-2007/091124
- US-A- 5 500 732
- US-A- 5 812 254
- US-A1- 2003 141 458
- US-A1- 2006 070 417

## Description

This invention related to methods of inspecting ophthalmic lenses during their production.

### BACKGROUND

Contact lenses have been used commercially to improve vision since the 1950s. The first contact lenses were made of hard materials. Although these lenses are currently used, they are not suitable for all patients due to their poor initial comfort. Later developments in the field gave rise to soft contact lenses, based upon hydrogels, which are extremely popular today. Further developments have lead to the development of silicone hydrogel lenses. Such silicone hydrogel lenses are known higher oxygen permeabilities and such are often more comfortable to wear than contact lenses made of hard materials. However, silicone hydrogel lenses are not without problems.

Silicone hydrogel lenses may be creased or otherwise physically distorted during their production. This problem can be seen when the lenses are sterilized. Typically, silicone hydrogel lenses are packaged in individual container containing ophthalmic packaging solutions and heated to temperatures of about 100 °C or greater. Due to their flexible nature, hydrogel lenses may be inverted during their preparation. Inversion means that the lenses are inside out with respect to the normal concave and convex surfaces of the lens. If a user were to place an inverted lens on his or her eye, the normal front curve (convex portion) would contact the user's eye instead of the normal back curve (concave portion). Classes of hydrogels, such as silicone hydrogels are subject to distortions (such as diameter) if such lenses are sterilized in an inverted position. Therefore, a method of determining if lenses are inverted prior to sterilization in order to identify lenses that are likely to be distorted would be useful. This need is met by the following invention.

Patent document WO01/84975 discloses a test for determining whether ophthalimic lenses are inverted in their packaging using ultrasonic waves. Optical methods to inspect lenses within their packaging are described in patent documents US2003/0141458, EP0686459 and US5500732.

### BRIEF DESCRIPTION OF THE DRAWING

Fig 1 Illustrates a lens inspection system of the invention.
Fig. 2 Illustrates the image of an non-inverted and an inverted lens.

### DETAILED DESCRIPTION OF THE INVENTION

This invention includes a method of determining whether an ophthalmic lens that is suspended in a solution is inverted in its packaging comprising illuminating the ophthalmic lens and its solution in its packaging, acquiring a image of the illuminated ophthalmic lens and analyzing the image to determine whether the ophthalmic lens is inverted, wherein the ophthalmic lens (10) is illuminated for about 100 to 1000 microseconds, and wherein the camera (18) points to the concavev side of the ophthalmic lens (10).

As used herein "ophthalmic lenses " refers to ophthalmic devices that reside in or on the eye. Ophthalmic lenses can provide optical correction or may be cosmetic. The term lens includes but is not limited to soft contact lenses, intraocular lenses, overlay lenses, ocular inserts, and optical inserts. The preferred lenses of the invention are silicone hydrogel lenses described in in US Patent No. 5,710,302, WO 9421698, EP 406161, JP 2000016905, U.S. Pat. No. 5,998,498, US Pat. App. No. 09/532,943, U.S. Patent No. 6,087,415, U.S. Pat. No. 5,760,100, U.S. Pat. No.5,776, 999, U.S. Pat. No. 5,789,461, U.S. Pat. No. 5,849,811, and U.S. Pat. No. 5,965,631. The preferred lenses include but are not limited to silicone hydrogels such as galyfilcon A, senofilcon A, genfilcon A, lenefilcon A, comfilcon A, acquafilcon A, balafilcon A, lotrafilcon A, narafilcon A, and silicone hydrogels as prepared in U.S. Pat. No. 5,998,498, US Pat. App. No. 09/532,943, a continuation-in-part of US Pat App. No. 09/532,943, filed on August 30, 2000, U.S. Patent No. 6,087,415, U.S. Pat. No. 5,760,100, U.S. Pat. No.5,776, 999, U.S. Pat. No. 5,789,461, U.S. Pat. No. 5,849,811, and U.S. Pat. No. 5,965,631. The most preferred ophthalmic lenses are senofilcon A, and acquafilcon A.

The "solution(s)" of the invention may be any water-based solution that is used for the sterilization and storage of contact lenses. Typical solutions include, without limitation, saline solutions, other buffered solutions, and deionized water. The preferred solution is saline solution containing salts including, without limitation, sodium chloride, sodium borate, sodium phosphate, sodium hydrogenphosphate, sodium dihydrogenphosphate, or the corresponding potassium salts of the same. These ingredients are generally combined to form buffered solutions that include an acid and its conjugate base, so that addition of acids and bases cause only a relatively small change in pH. The buffered solutions may additionally include 2-(N-morpholino)ethanesulfonic acid (MES), sodium hydroxide, 2,2-bis(hydroxymethyl)-2,2',2"-nitrilotriethanol, n-tris(hydroxymethyl)methyl-2-aminoethanesulfonic acid, citric acid, sodium citrate, sodium carbonate, sodium bicarbonate, acetic acid, sodium acetate, ethylenediamine tetraacetic acid and the like and combinations thereof. Preferably, the solution is a borate buffered or phosphate buffered saline solution.

"Packaging" refers to any receptacle that may be used to sterilize silicone hydrogel ophthalmic lens. Examples of such receptacles are disclosed in the following publications, WO 2005/082721, WO 03/016175, US 2004/0238380, U.S. Patent Nos. D 458,023; 4,691,820; 5,054,610; 5,337,888; 5,375,698; 5,409,104; 5,467,868; 5,515,964; 5,609,246; 5,695,049; 5,697,495; 5,704,468; 5,711,416; 5,722,536; 5,573,108; 5,823,327; 5,704,468; 5,983,608; 6,029,808; 6,044,966; 6,401,915, 7,086,526. The foregoing packaging is delivered to the consumer sealed by a cover. Examples of covers include but are not limited to foil laminates, transparent laminates, hardened plastics and flexible plastics. The methods of the invention may be used to inspect sealed packages, however, it is preferred that the packaging is inspected prior to sealing it with a cover.

"Inverted" refers to the orientation of the ophthalmic lens. If a user were to place an inverted lens on his or her eye, the normal front curve (convex portion) would contact the user's eye instead of the normal back curve (concave portion). "Illuminating" refers to shining a light on the lens. It is preferred that the lens is illuminated by a strobe light that flashes to illuminate the lens. The preferred wavelength of said flash is about 375 nm ± 10 to about 700 nm. The preferred duration of said flash is about 100 microseconds to about 1000 microseconds with an intensity of about 900 and to about 1200 mA. It is preferred that light source illuminates the ophthalmic lens from the convex side to the concave side whether or not the lens in an invented position.

The term "acquiring" refers to capturing the image of lens with a camera. The preferred camera is a Smart Camera or Smart Image Sensor. The preferred cameras are sold by DVT Inc. and Cognex Inc. The particularly preferred cameras are Smart Image Sensor 544 from DVT, Basler 201 B, and Dalsa Pentara SA. The term "analyzing" refers the use of algorithms with a computer where, the algorithms evaluate the acquired image with respect to images of non-inverted lenses. Suitable algorithms include but are not limited to BLOB analyses and Sobel edge detection algorithms. In addition, the inverted lens may be detected by comparing the diameter of an inverted lens, to the diameter of a non-inverted lens.

Further the invention includes an apparatus for determining whether an ophthalmic lens is inverted in its packaging comprising a light source, a camera and a computer. The terms ophthalmic lenses, solutions, packaging, analyzing, inverted, and acquiring have their aforementioned meanings and preferred ranges. Still further the invention includes ophthalmic lenses that are inspected by a method comprising illuminating the ophthalmic lens and its solution in its packaging, acquiring a image of the illuminated ophthalmic lens and analyzing the image to determine whether the ophthalmic lens is inverted. The terms ophthalmic lenses, solutions, packaging, analyzing, inverted, and acquiring have their aforementioned meanings and preferred ranges.

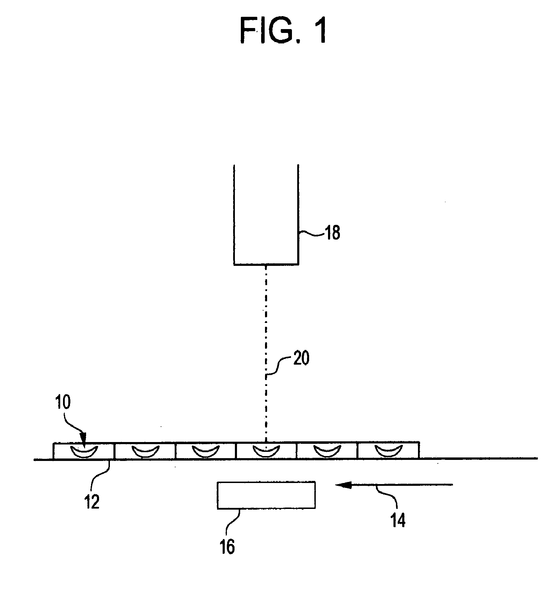

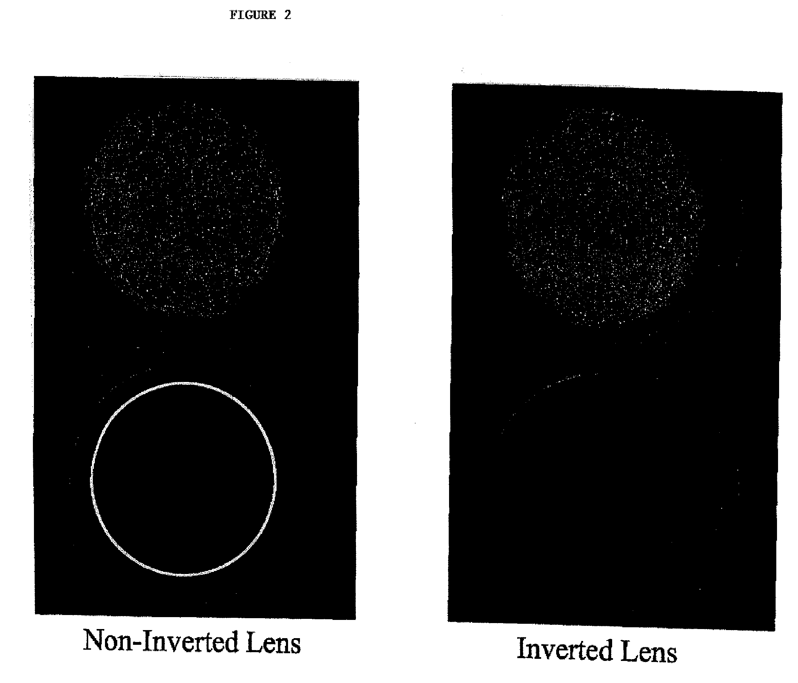

Referring to Figure 1, a series of ophthalmic lenses 10 are contained in the bowl of uncovered contact lens packages 12. Although not illustrated the lenses are contained suspended in saline packaging solution. The packages are moved along a conveyor belt the direction of arrow 14. Backlight 16 sits below packages 12 below the convex side of lenses 10. Camera 18 sits above packages 12 and points to the concave side of lenses 10. As the packages moves along the conveyor, a proximity sensor, not shown, triggers the flash of backlight 16 and the capture of the image by camera 18. The hashed line 20 represents the center point of the optics. The captured image is analyzed to determine if the lens is inverted. Figure 2 illustrates an image of a non-inverted lens and inverted lens. In an industrial application it is preferred that the inverted lens be discarded prior to covering and sterilizing the lens.

## Claims

1. A method of determining whether an ophthalmic lens (10) that is suspended in a solution is inverted in its packaging (12) comprising illuminating the ophthalmic lens (10) and its solution in its packaging (12), acquiring an image of the illuminated ophthalmic lens (10) using a camera (18) and analyzing the image to determine whether the ophthalmic lens (10) is inverted, wherein the ophthalmic lens (10) is illuminated for about 100 to about 1000 microseconds, and wherein the camera (18) points to the concave side of the ophthalmic lens (10).

2. The method of claim 1, wherein the ophthalmic lens is selected from the group consisting of galyfilcon A, senofilcon A, genfilcon A, lenefilcon A, comfilcon A, acquafilcon A, balafilcon A, lotrafilcon A, and narafilcon A.

3. The method of claim 1, wherein the solution is saline solution.

4. The method of claim 1, wherein the ophthalmic lens is illuminated at a wavelength of about 375 nm ± 10 to about 700 nm.

5. The method of claim 1, wherein the ophthalmic lens is illuminated for 100 microseconds.

6. The method of claim 1, wherein the image is analyzed using BLOB algorithms.

7. The method of claim 1, wherein the image is analyzed using Sobel edge algorithms.

8. The method of claim 1, wherein the illuminated packaging does not have a cover.

9. The method of claim 1, wherein the image is analyzed by comparing the diameter of the illuminated ophthalmic lens to the diameter of a non-inverted lens.

## Patentansprüche

1. Verfahren zum Bestimmen, ob eine Augenlinse (10), die in einer Lösung suspendiert ist, in ihrer Verpackung (12) umgedreht ist, umfassend das Beleuchten der Augenlinse (10) und ihrer Lösung in ihrer Verpackung (12), Erfassen eines Bilds der beleuchteten Augenlinse (10) unter Verwendung einer Kamera (18) und Analysieren des Bilds, um zu bestimmen, ob die Augenlinse (10) umgedreht ist, wobei die Augenlinse (10) etwa 100 bis etwa 1000 Mikrosekunden lang beleuchtet wird und wobei die Kamera (18) zur konkaven Seite der Augenlinse (10) weist.

2. Verfahren nach Anspruch 1, wobei die Augenlinse ausgewählt ist aus der Gruppe bestehend aus Galyfilcon A, Senofilcon A, Genfilcon A, Lenefilcon A, Comfilcon A, Acquafilcon A, Balafilcon A, Lotrafilcon A und Narafilcon A.

3. Verfahren nach Anspruch 1, wobei die Lösung eine Salzlösung ist.

4. Verfahren nach Anspruch 1, wobei die Augenlinse mit einer Wellenlänge von etwa 375 nm ± 10 bis etwa 700 nm beleuchtet wird.

5. Verfahren nach Anspruch 1, wobei die Augenlinse 100 Mikrosekunden lang beleuchtet wird.

6. Verfahren nach Anspruch 1, wobei das Bild unter Verwendung von BLOB-Algorithmen analysiert wird.

7. Verfahren nach Anspruch 1, wobei das Bild unter Verwendung von Sobel-Kantenalgorithmen analysiert wird.

8. Verfahren nach Anspruch 1, wobei die beleuchtete Verpackung keine Abdeckung aufweist.

9. Verfahren nach Anspruch 1, wobei das Bild analysiert wird durch Vergleichen des Durchmessers der beleuchteten Augenlinse mit dem Durchmesser einer nicht-umgedrehten Linse.

## Revendications

1. Procédé pour déterminer si une lentille ophtalmique (10) suspendue dans une solution est inversée dans son emballage (12), consistant à illuminer la lentille ophtalmique (10) et sa solution dans son emballage (12), à acquérir une image de la lentille ophtalmique (10) illuminée en utilisant une caméra (18), et à analyser l'image afin de déterminer si la lentille ophtalmique (10) est inversée, dans lequel la lentille ophtalmique (10) est illuminée pendant environ 100 à environ 1000 microsecondes, et dans lequel la caméra (18) est orientée vers le côté concave de la lentille ophtalmique (10).

2. Procédé selon la revendication 1, dans lequel la lentille ophtalmique est choisie dans le groupe comprenant du galyfilcon A, du senofilcon A, du genfilcon A, du lenefilcon A, du comfilcon A, de l'acquafilcon A, du balafilcon A, du lotrafilcon A et du narafilcon A.

3. Procédé selon la revendication 1, dans lequel la solution est une solution saline.

4. Procédé selon la revendication 1, dans lequel la lentille ophtalmique est illuminée à une longueur d'onde d'environ 375 nm ± 10 à environ 700 nm.

5. Procédé selon la revendication 1, dans lequel la lentille ophtalmique est illuminée pendant 100 microsecondes.

6. Procédé selon la revendication 1, dans lequel l'image est analysée à l'aide d'algorithmes BLOB.

7. Procédé selon la revendication 1, dans lequel l'image est analysée à l'aide d'algorithmes de bords Sobel.

8. Procédé selon la revendication 1, dans lequel l'emballage illuminé ne comprend pas de cache.

9. Procédé selon la revendication 1, dans lequel l'image est analysée en comparant le diamètre de la lentille ophtalmique illuminée au diamètre d'une lentille non inversée.
